## Europäisches Patentamt

## European Patent Office

## Office européen des brevets

(11) Veröffentlichungsnummer: **0 284 719**
**A1**

(12) **EUROPÄISCHE PATENTANMELDUNG**

(21) Anmeldenummer: 88101052.4

(22) Anmeldetag: 26.01.88

(51) Int. Cl.⁴: **H01S 3/097**

(30) Priorität: 23.02.87 DE 3705730
19.12.87 DE 3743258

(43) Veröffentlichungstag der Anmeldung:
05.10.88 Patentblatt 88/40

(84) Benannte Vertragsstaaten:
AT BE CH DE ES FR GB IT LI NL SE

(71) Anmelder: **MESSER GRIESHEIM GMBH**
**Hanauer Landstrasse 330**
**D-6000 Frankfurt/Main 1(DE)**

(72) Erfinder: **Uhlenbusch, Jürgen, Prof.Dr.**
**Ruhrstrasse 30**
**D-4006 Erkrath(DE)**
Erfinder: **Schäfer, Johannes, Dr.**
**Friedrichstrasse 48**
**D-4040 Neuss(DE)**
Erfinder: **Zhang, Ze Bo**
**Christophstrasse 52**
**D-4000 Düsseldorf(DE)**

(54) **Verfahren zur elektrischen Anregung eines Lasergases.**

(57) Die Erfindung betrifft ein Verfahren zur elektrischen Anregung eines Lasergases, insbesondere eines $CO_2$-He-$N_2$-Gemisches durch Einkopplung von Mikrowellen im GHz-Bereich in einem Mikrowellenhohlleiter, der gleichzeitig die Entladungsstrecke enthält.

Um bei der Mikrowellenanregung eines Lasergases die Ausbildung von Wandgrenzschichten zu vermeiden und ein homogenes großvolumiges Plasma zu erreichen, wird das Lasergas im Einkoppelbereich (14) der Mikrowelle nach Passieren eines Strömungsformers zugeführt und dort durch eine Koaxial-Hohlleiter Anordnung (21) gezündet. Das gezündete Lasergas breitet sich dann mit der Mikrowelle in der Entladungsstrecke aus und bildet dort ein homogen angeregtes laseraktives Medium. Die Homogenität wird zusätzlich dadurch verbessert, daß der Mikrowellenhohlleiter (52) in der Nähe der "cut-off-Breite" betrieben wird.

Fig. 2

## Verfahren zur elektrischen Anregung eines Lasergases

Die Erfindung betrifft ein Verfahren zur elektrischen Anregung eines Lasergases, insbesondere eines $CO_2$-He-$N_2$-Gemisches, welches unter einem Winkel, vorzugsweise senkrecht zur axialen Lasergasentladungsstrecke, zugeführt wird und welches durch unter einem Winkel, vorzugsweise senkrecht, zur Lasergasentladungsstrecke eingekoppelte Mikrowellen gezündet wird.

Laserlicht wird häufig in einem optischen Resonator, bestehend aus zwei Spiegeln und einem laseraktiven Medium mit Hilfe von Lichtverstärkung durch stimulierte Emission erzeugt.

Das laseraktive Medium wird aus angeregten atomaren Systemen, im Falle des $CO_2$-Lasers aus angeregten $CO_2$-Molekülen, gebildet. Die Anregung erfolgt häufig durch eine elektrische Entladung. Beim Zünden dieser Entladung muß die elektrische Feldstärke innerhalb des Entladungsrohres wesentlich höhere Werte annehmen, als zum Aufrechterhalten des Entladungsplasmas erforderlich ist. Treffen Mikrowellen auf das noch nicht angeregte Lasergas, so erfolgt bei ausreichender Feldstärke eine Zündung des Lasergases, so daß eine kleine Plasmazone entsteht. Diese Plasmazone absorbiert die Mikrowellen, zusätzliche Elektronen entstehen und die Plasmazone weitet sich aus, bis bei einer bestimmten Elektronendichte, der sogenannten "cut-off-Dichte" die Mikrowellen fast vollständig in Richtung Mikrowellensender vom Plasma reflektiert werden. Dabei wächst zwischen Sender und Plasma, die elektrische Feldstärke und das Plasma dehnt sich weiter in Richtung Mikrowellensender aus. Dieser Vorgang setzt sich solange fort, bis die Mikrowelle die Gefäßwand oder das Mikrowelleneintrittsfenster erreicht hat.

Die für das Einsetzen der Reflektion wichtige "cut-off-Dichte" ist eine Funktion der Mikrowellenfrequenz und der Stoßfrequenz zwischen Elektronen und Molekülen. Bei Erreichen dieser "cut-off Dichte" ist ein Endzustand erreicht, bei der die Mikrowellen in der Wandgrenzschicht völlig absorbiert werden und nicht mehr in den Entladungsraum vordringen können. Die Wandgrenzschicht heizt sich immer mehr auf, was häufig zur Beschädigung des dielektrischen Entladungsrohres und des Mikrowellenfensters führt.

Der Publikation "Schock, W., Laser-Kolloquium 85,13 DFVLR-Institu für Technische Physik" entnimmt man, daß sich in der Entladungsstrecke von Gaslasern bei Mikrowellenanregung eine stark absorbierende Wandgrenzschicht mit hoher Elektronendichte ausbildet, die den Laserbetrieb normalerweise uneffektiv macht. Um die Wandgrenzschicht zu vermeiden, hat die Deutsche Forschungs-und Versuchsanstalt für Luft-und Raumfahrt (DFVLR, Institut für Technische Physik) den Weg beschritten, die Mikrowellen in eine Düsenströmung mit hohem Druckgefälle einzukoppeln. Durch den Aufbau eines hohen Druckes hinter dem dielektrischen Fenster wird eine Zündung in diesem Bereich vermieden. Die Zündung des Lasergases findet im Niederdruckbereich hinter der Düse statt. Bei einer Mikrowellenleistung von 4.75 KW kann dabei maximal eine kontinuierliche $CO_2$-Laserleistung von 340 W bei 7 % Wirkungsgrad erreicht werden. Da das Lasergas in Fortpflanzungsrichtung der Mikrowellen strömt und der Resonator senkrecht zum inhomogen sich ausbildenden laseraktiven Medium steht und davon nur einen Teil umfaßt, ist der Wirkungsgrad dieser Anordnung gering. Die gesamte Anlage ist wegen des erforderlichen großen Massenstromes und wegen der hohen Druckdifferenzen sehr aufwendig und kostspielig.

Aus einem Artikel der Zeitschrift mit dem Titel "Journal of Applied Physics" 49 (7) Juli 1978, "Lasergeneration by pulsed 2,45-GHz microwave excitation of $CO_2$" von Handy und Brandelik, Seiten 3753 bis 3756 ist ein Verfahren zur Mikrowellenanregung eines Gaslasers bekannt, was zu einem gattungsmäßig ähnlichen Gaslaser führt. Bei diesem Gaslaser durchdringen die Mikrowellen senkrecht zur Lasergasströmung das Lasergas, welches an einem senkrecht zur Mikrowelleneinkopplung angeordneten Entladungsrohreingang einströmt und an einem senkrecht zur Mikrowelleneinkopplung angeordnetem Entladungsrohrausgang ausströmt. Aufgrund dieser Ausbildung der Anordnung liegt das aufgeheizte Plasma an der dielektrischen Entladungsrohrwand an und bildet hier eine stark absorbierende Wandgrenzschicht aus. Dies führt zu einem geringen Wirkungsgrad des Gaslasers und erfordert eine Kühlung mit auf 200 K vorgekühltem Stickstoff.

Der hier vorgelegten Erfindung liegt die Aufgabe zugrunde, bei der Mikrowellenanregung eines Lasergases die Ausbildung der oben erwähnten Wandgrenzschichten zu vermeiden und eine homogene großvolumige Glimmentladung zu erreichen.

Diese Aufgabe wird erfindungsgemäß dadurch gelöst, daß das Lasergas im Einkoppelbereich der Mikrowelle zugeführt wird, das Lasergas dort gezündet wird und das gezündete Lasergas mit der Mikrowelle sich über die Verzweigung in die beiden die Entladungsstrecke bildenden Arme bzw. den einen, die Entladungsstrecke bildenden Arm, ausbreitet.

Die Entladungsstrecke wird dabei an diejenige Stelle in einem abgeschlossenen Mikrowellen-Hohlleiter gebracht, wo das elektrische Feld hohe Werte aufweist. Ein-und Ausströmstelle des Lasergases sind so angelegt, daß das Mikrowellenfeld nicht entweichen kann.

Durch die vorteilhafte Einkopplung der Mikrowellen senkrecht zur Fortpflanzungsrichtung der Mikrowellen und des Lasergases im Hohlleiter wird die Feldstärke im Einkopplungsbereich der vorzugsweise als T-oder L-Verzweigung ausgebildeten Verzweigung merklich größer als sie in den beiden die Entladungsstrecke bildenden Armen bzw. dem einen die Entladungsstrecke bildenden Arm ist. Dadurch, daß weiterhin die in die als Koaxialhohlleiter der Länge $\lambda/4$ ausgebildete Lasergaszuführung einfallenden Mikrowellen vorteilhaft durch einen Kurzschluß reflektiert werden und an der Spitze eines in der Lasergaszuführung angeordneten Zündstiftes mit erhöhter elektrischer Feldstärke zur Verfügung stehen, kann an der Spitze des Zündstiftes die Zündung der Entladung eingeleitet werden. Es entsteht am freien Ende des Zündstiftes ein Plasma, welches vorteilhaft von der Strömung in die Lasergasentladungsstrecke transportiert wird. Das in die Entladungsstrecke transportierte Plasma absorbiert vorteilhaft jetzt die Mikrowellen in der Entladungsmitte, nicht in Wandnähe und hält den Anregungsprozeß aufrecht. Durch geeignete Formgebung des Hohlleiters gelingt es, den mit der Absorption der Mikrowelle verbundenen Leistungs-und Feldabfall in Strömungsrichtung aufzufangen.

Dadurch, daß die Querabmessung des abgeschlossenen Hohlleiters so gewählt wird, daß die Wellenlänge der Mikrowellen viel größer als die doppelte Länge der Entladungsstrecke ist, wird vorteilhaft erreicht, daß die elektrische Anregung in Strömungsrichtung nahezu konstant bleibt. Hierzu wird vorteilhaft für rechteckige Hohlleiter die Breite des Hohlleiters bis an die "Cut-off-Breite" verringert, bei runden Hohlleitern bis an den "cut-off-Durchmesser".

Die "cut-off-Breite" entspricht der halben Wellenlänge der Mikrowelle im freien Raum, für den "cut-off-Durchmesser" gilt 0,58 x Wellenlänge im freien Raum.

Dadurch, daß vorteilhaft die Lasergasentladungsstrecke mit der optischen Achse des Resonators zusammenfällt, liegt das gesamte angeregte Lasergas in dem optischen Resonator. Durch Optimierung des Lasers entsteht vorteilhaft eine homogene Entladung über dem Querschnitt des Laserstrahles.

Durch die Verwendung preiswerter Mikrowellensender, insbesondere durch den vorteilhaften Einsatz von Mikrowellenherdsendern, zur Anregung des Gaslasers wird der Betrieb dieses Lasers effektiver, umweltfreundlicher und wirtschaftlicher. Das System besitzt wegen des hohen Wirkungsgrades des Mikrowellensenders und wegen des Fehlens der Belastungswiderstände eine hohe Effizienz. Der Wirkungsgrad diese im Gigahertzbereich (2.45 GHz) angeregten Gaslasers liegt bei ca. 30 %. Dabei ist der Druck in der Entladung zur Erzielung einer hohen Leistungsdichte und zur Vereinfachung der Gasumwälzung auf höhere Werte als bei Gleichstrom-oder Hochfrequenzanregung einstellbar. Vorteilhaft ist, daß ein Mikrowellensender mit einem elektrischen Wirkungsgrad von 70 % eingesetzt werden kann, wodurch die für den Zündvorgang erforderlichen Bauteile kostengünstig sind. Vorteilhaft ist, daß der Lasergaskreislauf wegen des kompakten Aufbaus und des speziellen Gaseinlaufes nur einen geringen Strömungswiderstand aufweist, wodurch die Gasumwälzung vereinfacht wird. Es sind keine Hochleistungsumwälzpumpen mit großer Lärmentwicklung erforderlich. Vorteilhaft ist, daß keine Hochspannungsgefahr besteht, da das Gehäuse des Senders geerdet ist und keine hochspannungsführenden Bauteile vorhanden sind. Mit einem mikrowelleenangeregten Gaslaser entsprechend den Ansprüchen 1 bis 32 sind Ausgangsleistungen bis zu einigen kW (Kilowatt) erreichbar. Der mikrowellenangeregte Gaslaser kann vorteilhaft im kontinuierlichen oder gepulsten Betrieb arbeiten. Die Erfindung ist im vorliegenden Ausführungsbeispiel anhand eines bevorzugt eingesetzten Hochleistungslasers beschrieben. Mit Hochleistungslaser wird hierbei ein Laser bezeichnet, welcher bevorzugt zur Materialbearbeitung, insbesondere zum Schweißen, Schneiden oder Oberflächenveredeln eingesetzt werden kann. Als Lasermedium dient ein schnellströmendes Helium-Kohlendioxid-Stickstoffgemisch, das nach dem Zünden bei einem Druck von beispielsweise 70 Millibar brennt. Selbstverständlich kann das Verfahren und die Vorrichtung nach der Erfindung auch bei den im infraroten Spektralbereich arbeitenden CO-, HCN-oder HF-Gaslasern bei einem Druckbereich zwischen 20 bis 200 Millibar vorteilhaft angewendet werden.

Bei einer vorteilhaften Ausbildung eines axial beströmten Gaslasers besteht das Entladungsmodul aus einer T-Verzweigung mit zwei sich gegenüberliegenden, vorzugsweise gleich langen Armen und einer unter einem Winkel, vorzugsweise senkrecht, zur axialen Lasergasentladungsstrecke angeordneten Lasergaszuführung bzw. aus einer L-Verzweigung mit einem der Lasergaszuführung zugeordneten Arm, wobei der zum Mikrowellensender führende Hohlleiter zur axialen Lasergasentladungsstrecke geneigt, vorzugsweise senkrecht dazu und im Bereich der Verzweigung der Lasergaszuführung angeordnet ist. Durch die T-oder L-Verzweigung wird das Lasergas vorteilhaft in Resonatorrichtung mit mindestens einem Mikrowellensender angeregt.

In einer vorteilhaften Ausführungsform ist vorgesehen, daß der Hohlleiter, der die Entladungsstrecke aufnimmt und der Hohlleiter zwischen Sender und Entladungsstrecke vorzugsweise einen rechteckigen Querschnitt aufweisen, daß in einer Seite des Hohlleiters zwischen Sender und Entladungsstrecke zwei Schrauben zum Bilden einer Hohlleiterstrecke zur Impedanzanpassung angeordnet sind, daß der Mittenabstand der Schrauben 1/4 der Wellenlänge im Hohlleiter entspricht und der Abstand der einen Schraube zur Längenmitte 1/16 der Wellenlänge im Hohlleiter beträgt. Durch diese vorteilhafte Ausbildung sind nur zwei Schrauben für alle Impedanzen erforderlich, da durch eine Drehung des Hohlleiters eine 4-Schraubenkonfiguration erreicht wird.

Um die Mikrowellen nach außen abzuschirmen, ist der Koaxialhohlleiter auf der Seite der Gaseinströmung elektrisch abgeschlossen. Der Zündstift trägt zusätzlich zur Formung der Strömung eine dielektrischen Körper, der so ausgeelegt ist, daß einmal der Querschnitt des Koaxialhohlleiters für die Strömung nicht verstopft wird und zum anderen im dielektrischen Entladungsrohr eine mit Wirbeln behaftete Strömung entsteht.

Unter Koaxialhohlleiter wird ein Hohlleiter mit elektrisch leitendem Außenmantel und rechteckigem oder runden Querschnitt verstanden, in dem ein Innenleiter angeordnet ist.

In vorteilhafter Ausbildung ist innerhalb der Hohlleiter konzentrisch ein vorzugsweise dielektrisches Entladungsrohr mit T-oder L-Verzweigung angeordnet, dessen Einlauf für das Lasergas in den Koaxialhohlleiter mit kreisförmigen Querschnitt hineinreicht. Durch die Anordnung eines dielektrischen Entladungsrohres innerhalb der Hohlleiter wird das angeregte Lasergas in definierter Weise eingeschlossen.

Durch die Anordnung einer elastischen Dichtung zwischen Koaxialhohlleiter und Einlauf des dielektrischen Entladungsrohrs wird vorteilhaft eine Abdichtung gegenüber dem höheren Umgebungsdruck erreicht.

In einer vorteilhaften Ausführungsform ist vorgesehen, daß der gleichzeitig als Gaseinlaß dienende Koaxialhohlleiter eine Länge besitzt, die 1/4 der Wellenlänge im Koaxialhohlleiter entspricht und am elektrisch abgeschlossenen Ende des Koaxialhohlleiters der Kurzschluß als metallischer Zündstifthalter ausgebildet ist, der einmal den erforderlichen Gasdurchsatz erlaubt, die Mikrowelle nach außen abschirmt und mindestens eine Zündstift trägt. Der Zündstift ist vorteilhaft in seiner Eintauchtiefe im Koaxialhohlleiter verstellbar und weist vorzugsweise zu dem elektrisch abgeschlossenen Ende einen größeren Durchmesser auf als an seinem freien Ende. Dabei bestimmt vorteilhaft der zum Kurzschluß weisende größere Durchmesser des Zündstiftes die in den Koaxialhohlleiter einfallende Mikrowellenenergie, während das durchmesserkleinere freie Ende die Zündfeldstärke bestimmt. Über das Verstellen der Eintauchtiefe des Zündstiftes wird die Zündfeldstärke optimiert.

Der dielektrische Strömungskörper ist vorteilhaft so ausgelegt, daß die Strömung die Wandzone des Einkopplungsbereichs kühlt, in der Nähe des Zündstiftes ein die Zündung förderndes Totwasser erzeugt und durch Turbulenz im dielektrischen Entladungsrohr eine Homogenisierung des Temperaturprofils bewerkstelligt.

Dadurch, daß die Breite des rechteckigen Hohlleiters durch keilförmige metallische Einsätze ungefähr auf die Abmessung der oben eingeführten "Cut-off-Breite" reduziert wird, wird vorteilhafte die Wellenlänge der Mikrowellen innerhalb des Hohlleiters bei Erhöhung des elektrischen Feldes vergrößert, so daß einerseits Wandgrenzschichten in Resonatorlängsrichtung vermieden werden, andererseits werden durch die keilförmigen Einsätze, die durch die vorangegangene Absorption der Mikrowellen im hinteren Teil reduzierte Leistung und die damit hervorgerufene Feldstärkeverringerung kompensiert.

Dadurch, daß weiterhin profilierte Metallstäbe von definierten Abmessungen zur Formung des elektrischen Felds an der Innenwand der Breitseite des rechteckigen Hohlleiters angebracht sind und die Metallstäbe eine kleinere Breite aufweisen als der Entladungsrohrdurchmesser, werden vorteilhaft Wandgrenzschichten in Resonatorquerrichtung vermieden. Das elektrische Feld wird in der Mitte des Entladungsrohres verstärkt und zentriert.

In einer weiteren vorteilhaften Ausführungsform ist vorgeschlagen, daß ein zylindrischer Hohlleiter ohne dielektrisches Entladungsrohr direkt als Entladungsraum benutzt wird. Hierdurch wird ein einfacher, kostengünstiger Aufbau erreicht, dessen metallischer Außenbereich in einfacher Weise mit einer Flüssigkeit beispielsweise Wasser, gekühlt werden kann. Hierbei wird der Niederdruckbereich des Entladungsraumes vorteilhaft mit einem dielektrischen Fenster vakuumdicht abgeschlossen. Zur Vermeidung der Zündung an der Niederdruckseite hinter dem Fenster sollte der Raum unmittelbar hinter dem Fenster größer als die Abmessungen des rechteckigen Hohlleiters für die Einkopplung der Mikrowellen sein. Weiter ist durch die Justage der oben erwähnten impedanzangepaßten Hohlleiterstrecke sicherzustellen, daß auf der dem Niederdruck zugewandten Fensterseite ein niedriges Feld vorliegt.

In einer weiteren vorteilhaften Ausführungsform wird das Lasergas über im wesentlichen die gesamte Lasergasentladungsstrecke transversal zu- und abgeführt, wobei die in die als Koaxialhohlleiter ausgeführte Lasergaszuführung einfallenden Mikrowellen an einem Kurzschluß reflektiert werden und im Bereich mehrerer Zündstifte im Bereich der Lasergaszuführung eine elektrische Zündfeldstärke über die gesamte Lasergasentladungsstrecke erzeugen. Durch dieses Verfahren kann der Gaslaser zur Durchführung des Verfahrens vorteilhaft mit geringen Strömungsgeschwindigkeiten bei gleicher Wärmeabfuhr betrieben werden. Vorteilhaft entstehen nur geringe Strömungsverluste beim Umwälzen. Es können Gebläse verwendet werden, die nur eine geringe Druckdifferenz aufbringen.

Weitere vorteilhafte Ausführungen der Erfindung sind in den Unteransprüchen angegeben.

Ausführungsbeispiele der Erfindung sind in den Zeichnungen dargestellt und werden im folgenden näher beschrieben.

Es zeigen:

Fig. 1 einen vorteilhaften Aufbau eines Entladungsmoduls des axialbeströmten mikrowellenangeregten kontinuierlich bzw. gepulst arbeitenden Gaslasers mit T-Verzweigung in schematischer Darstellung, dem ein rechteckiger Hohlleiter zur Aufnahme der Entladungsstrecke aus dielektrischem Material, ein Koaxialhohlleiter mit Zündstift und Zündstifthalter als Einlauf für die Gasströmung, eine dielektrischer Strömungskörper, eine Hohlleiterstrecke zur Impedanzanpassung und ein Mikrowellensender zugeordnet sind;

fig. 2 einen Längsschnitt durch den rechteckigen Hohlleiter aus Fig. 1; mit einem dielektrischen Rohr als Lasergasentladungsstrecke, den Einlauf für die Gasströmung, den Zündstift nebst Halterung mit Strömungskörper;

Fig. 3 eine Draufsicht auf den Koaxialhohlleiter mit dem als Zündstifthalter ausgebildeten Kurzschluß;

Fig. 4 einen vorteilhaften Aufbau eines Entladungsmoduls mit L-Verzweigung;

Fig. 5 einen Querschnitt durch die rechteckige Entladungsstrecke nach Fig. 1 oder Fig. 4 mit zwei profilierten Metallstäben zur Formung des elektrischen Feldes und einem abstimmbaren impedanzangepaßten Hohlleiter zur Impedanzanpassung zum Anschluß des Mikrowellensenders;

Fig. 6 einen Querschnitt eines Entladungsrohres des axialbeströmten mikrowellenangeregten kontinuierlich bzw. gepulst arbeitenden Gaslasers, bestehend aus einem zylindrischen Hohlleiter zur direkten Aufnahme der Mikrowellenentladung mit tangentialem Gaseinlauf;

Fig. 7 einen schematischen Aufbau eines Druckfensters für einen Gaslaser nach Fig. 6, wobei zwei Rundflansche mit Anschlüssen für zwei Hohlleiter und ein dielektrisches Fenster dargestellt sind;

Fig. 8 einen schematischen Aufbau eines Moduls des transversalbeströmten mikrowellenangeregten kontinuierlich bzw. gepulst arbeitenden Gaslasers, dem ein rechteckiger Hohlleiter mit innen angeordneten profilierten Metallstäben als Entladungsraum, ein rechteckiger Koaxialhohlleiter als Einlauf für die Gasströmung, Zündstifte und Gasauslaßmetallnetz zugeordnet sind;

Fig. 9 einen Längsschnitt durch den rechteckigen Hohlleiter wie in Fig. 8 beschrieben, mit innen angeordneten profilierten Metallstäben mit einem speziellen Hohlleiter als Einlauf für die Gasströmung mit Zündstiften und Gasauslaßmetallnetz;

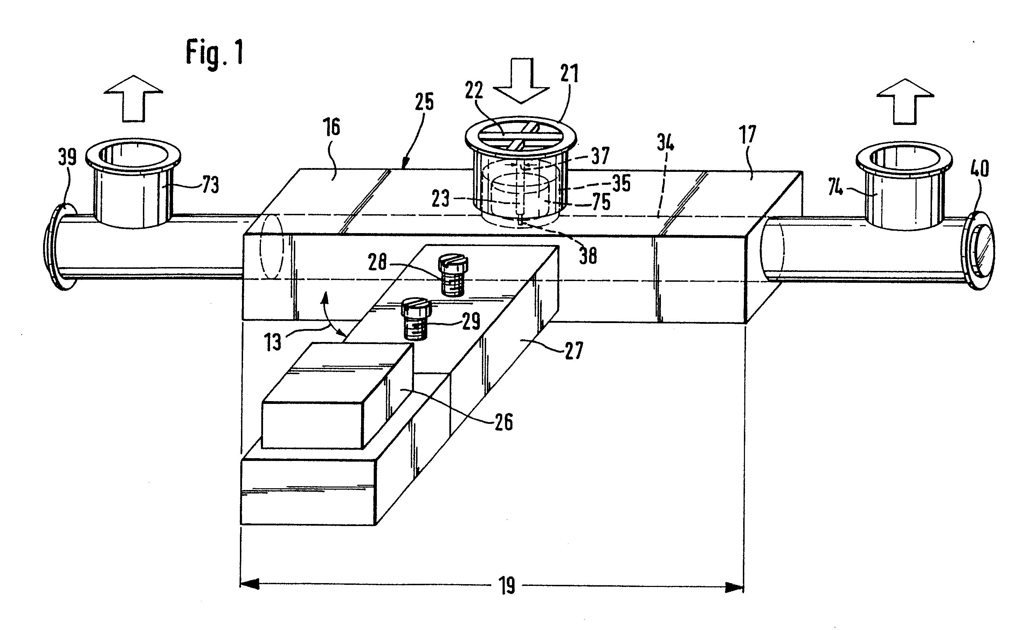

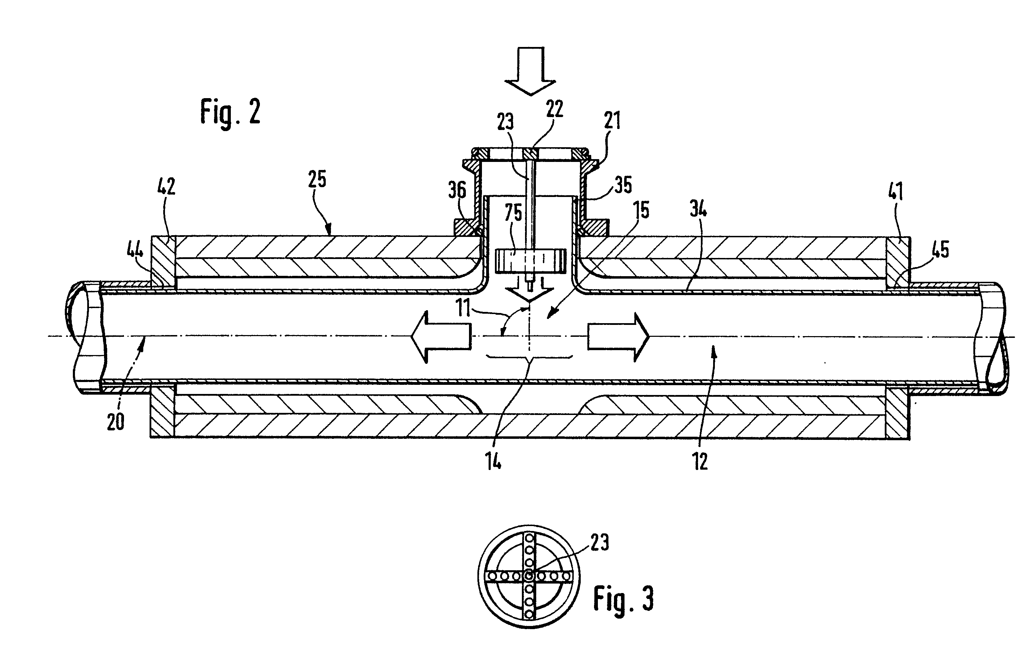

In den Figuren 1, 2, 4 und 5 ist ein Entladungsmodul 25 des axialbeströmten, mikrowellenangeregten Gaslasers zur Aufnahme der auf der optischen Achse 20 des Resonators liegenden Lasergasentladungsstrecke 12 dargestellt. Das Entladungsmodul 25 besteht im wesentlichen aus einer T-Verzweigung 15 mit zwei gleichlangen Armen 16, 17 und einer unter einem Winkel 11 von vorzugsweis 90° zur Lasergasentladungsstrecke 12 angeordneten Lasergaszuführung 21. Den Lasergastransport von der Lasergaszuführung 21 zu den beiden Lasergasaustrittsöffnungen 73, 74 übernimmt eine nicht näher dargestellte Pumpe. Vorzugsweise ist der Gastransport als in sich geschlossener Lasergaskreislauf ausgebildet.

Alle Arme 16, 17 sind nach einem Ausführungsbeispiel als Hohlleiter mit rechteckigem oder runden Querschnitt und die Lasergaszuführung 21 als Koaxialhohlleiter ausgebildet und dienen zur konzentrischen Aufnahme eines dielektrischen Entladungsrohres 34.

Unter einem Winkel 13 von vorzugsweise 90° ist im Bereich der Verzweigung 15 der Arme 16, 17 und der Lasergaszuführung 21 ein Hohlleiter 27 mit rechteckförmigen Querschnitt angeschlossen, der mit dem Mikrowellensender 26 verbunden ist. Der Mikrowellensender 26 ist vorteilhaft als ein an sich bekannter Mikrowellenherdsender mit einer Frequenz von 2,45 Gigahertz ausgebildet.

Über eine nicht näher dargestellte Antenne des Mikrowellensenders 26 werden die Mikrowellen in den impedanzangepaßten, mit den mit zwei Schrauben 28, 29 abstimmbaren rechteckigen Hohlleiter 27 abgestrahlt und das Lasergas im Einkoppelbereich 14 des Entladungsmoduls 25 angeregt. Jede Schraube 28, 29 befindet sich in einer Hälfte 33 der Seite 32, wobei der Mittenabstand 30 1/4 der Wellenlänge im Hohlleiter 27 entspricht und der Abstand der Schraube 28 von der Längenmitte 31 der Seiten 1/16 der Wellenlänge im Hohlleiter 27 beträgt.

Die Lasergaszuführung 21 ist an ihrem elektrisch abgeschlossenen Ende mit einem metallischen Kurzschluß 22 versehen, der als Zündstifthalter ausgebildet ist und der den dielektrischen Strömungskörper 75 trägt. Der Zündstifthalter trägt mindestens einen in die Lasergaszuführung 21 eintauchenden Zündstift 23. Der Zündstift 23 ist vorzugsweise in seiner Eintauchtiefe in der Lasergaszuführung 21 verstellbar und weist vorzugsweise an seinem zum Kurzschluß 22 weisenden Ende einen größeren Durchmesser 37 auf, als an seinem freien Ende 38. Zwischen der Lasergaszuführung 21 und dem Einlauf 35 des Entladungsrohres 34 ist eine Dichtung 36 angeordnet.

Die als Hohlleiter ausgebildeten Arme 16,17 sind an ihren zu den Auskoppel-bzw. Endspiegeln 39,40 gerichteten Seiten mit Endplatten 41, 42 verschlossen, die den Austritt der Mikrowellen verhindern. In den Endplatten 41, 42 sind zentrische Durchtrittsöffnungen 44,45 zum Durchführen des dielektrischen Entladungsrohres 34 vorgesehen. An der mit dem Hohlleiter 27 verbundenen Wand 50 und dieser Wand gegenüberliegenden Wand 51 sind keilförmige metallische Einsätze 52 innerhalb der rechteckigen Hohlleiter 16,17 angeordnet, die die Breite des Hohlleiters 16,17 bis nahezu auf die "Cut-off-Breite" reduzieren. Die keilförmigen metallischen Einsätze 52 verlaufen ausgehend von dem Bereich der Verzweigung 15 unter einem ansteigenden Winkel zu den Endplatten 41, 42 so, daß innerhalb der Hohlleiter 16, 17 die Wellenlänge der Mikrowellen größer als die Linearabmessung 19 der doppelten Lasergasentladungsstrecke 12 ist.

An den zu den Wänden 50, 51 senkrecht verlaufenden Wänden 53, 54 der Hohlleiter 16, 17 sind profilierte Metallstäbe 55 mit halbkreisförmiger Oberfläche angeordnet. Die profilierten Metallstäbe 55 weisen eine kleinere Breite 56, als die Entladungsrohrdurchmesser 57 auf und verlaufen parallel zur optischen Achse 20 unter-bzw. oberhalb des Entladungsrohres 34.

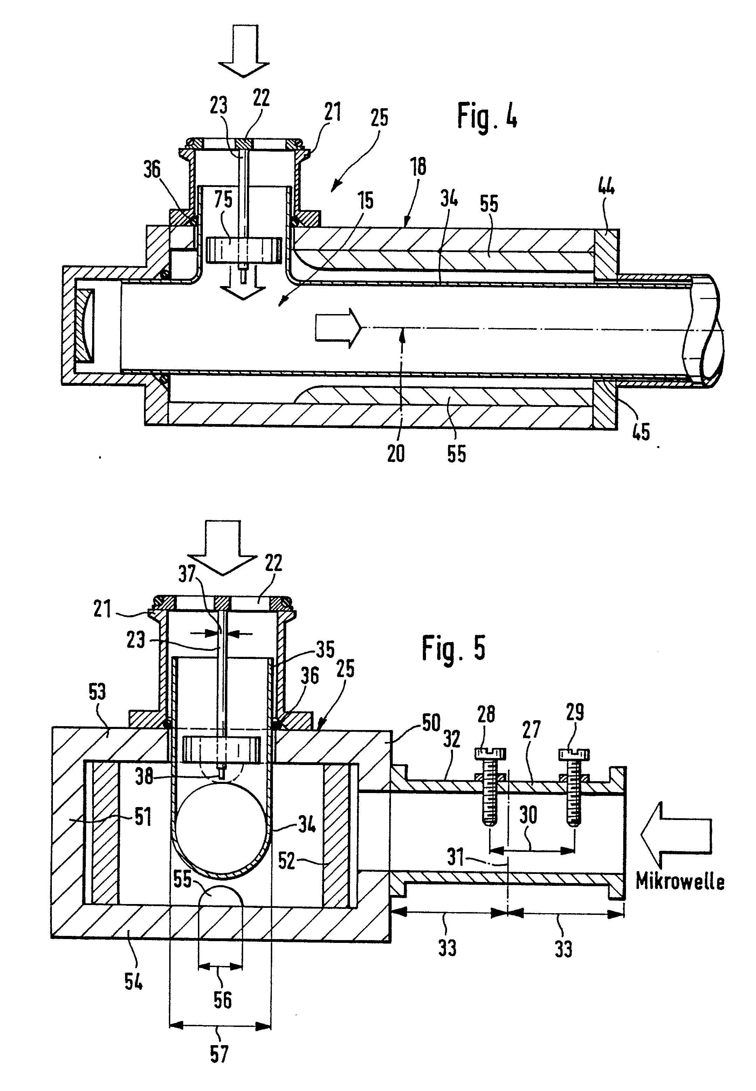

In der Fig. 4 ist ein Entladungsrohrmodul 25 mit L-Verzweigung 15 dargestellt, welcher aus einer Lasergaszuführung 21 und nur einem, dieser zugeordneten Arm 18 besteht. Das Entladungsmodul 25 entspricht in seinem weiteren Aufbau dem vorstehend beschriebenen Entladungsmodul, wobei gleiche Bauteile mit gleichen Bezugsziffern bezeichnet sind.

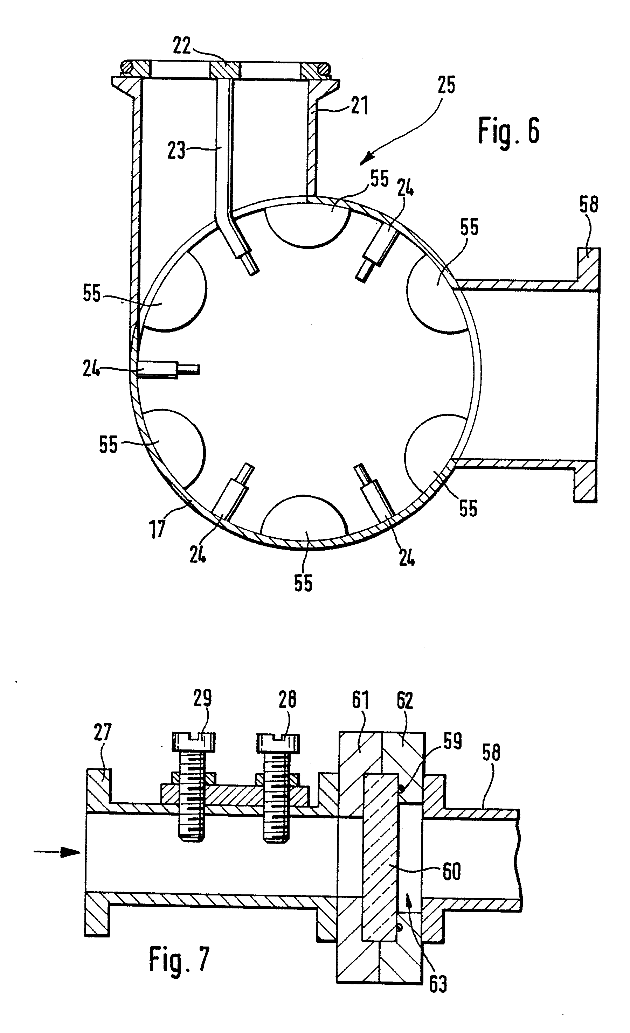

In der Fig. 6 ist ein Entladungsmodul 25 des Gaslasers im Querschnitt dargestellt, der aus zwei zylindrischen Hohlleitern 16, 17 mit T-Verzweigung oder einem zylindrischen Hohlleiter 18 mit L-Verzweigung zur direkten Aufnahme der Lasergasentladungsstrecke 12 besteht. Im Inneren der zylindrischen Hohlleiter 16,17,18 sind profilierte Metallstäbe zur Formung des elektrischen Feldes angeordnet. Zur Erzeugung einer Drallströmung in der Mikrowellenentladung ist die Lasergaszuführung 21 tangential angeordnet. Der Zündstift 23 am Gaseinlauf taucht bei diesem Entladungsmodul 25 in den Hohlleiter 16,17,18 ein und erzeugt zusammen mit Zündstiften 24, die in der gemeinsamen Ebene von Lasergaszuführung 21 und Mikrowelleneinkopplung angeordnet sind, eine Zündfeldstärke zum Anregen des Lasergases. Über einen Anschluß 58 sind die Hohlleiter 16, 17, 18 mit dem rechteckigen Hohlleiter 27 zur Impedanzanpassung verbunden. Zwischen dem Anschluß 58 und dem Hohlleiter 27 ist der Niederdruckbereich (Entladungsmodul 25) über einen vakuumdichten Abschluß 59, bestehend aus einem Fenster 60, welches vorzugsweise in zwei Rundflanschen 61,62 eingesetzt ist, gegenüber der Atmosphäre abgedichtet. Zur Vermeidung der Zündung auf der Niederdruckseite unmittelbar am Fenster 60 ist der zur Lasergasentladungsstrecke gerichtete Raum 63 hinter dem Fenster 60 größer als der Querschnitt des Hohlleiters 27.

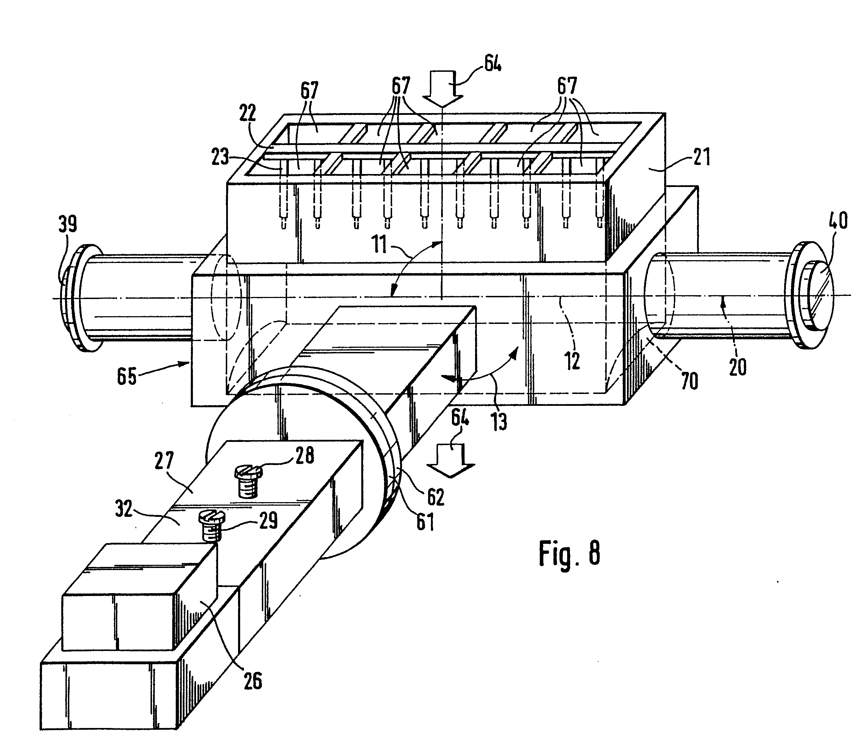

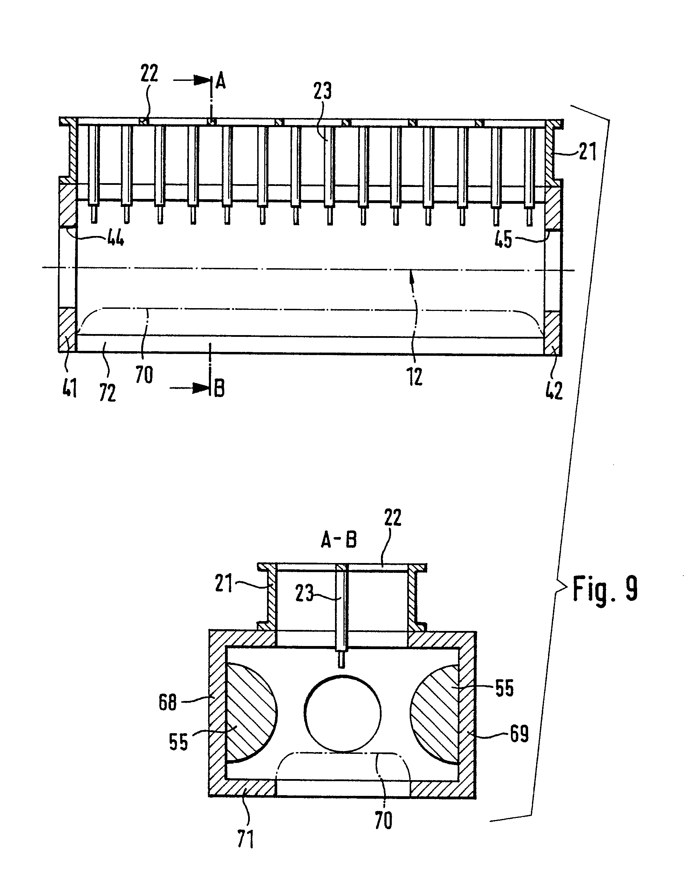

In den Figuren 8, 9 ist ein Entladungsraum 65 eines transversal (Pfeilrichtung 64) beströmten mikrowellenangeregten Gaslasers mit rechteckigem Hohlleiter zur Aufnahme der Lasergasentladungsstrecke 12 dargestellt. Er besteht aus folgenden Teilen: einem rechteckigen Hohlleiter, der gleichzeitig den Entladungsraum 65 bildet; einer speziellen Lasergaszuführung 21 mit Öffnungen 67 für den Gaseinlaß, die als Hohlleiter mit rechteckförmigem Querschnitt ausgebildet sind und sich nahezu über den gesamten Entladungsraum 65 erstrecken, einem Kurzschluß 22, der die Zündstifte 23 und die Zündstifthalter enthält und durch seine konstruktiven Elemente den Austritt der Mikrowelle verhindert; einem an der Breitseite 71 angeordneten Metallnetz 70, das die Gasströmung zur Lasergasabführung 72 passieren läßt, aber nicht die Mikrowellen; zwei profilierten Metallstäben 55 an den Schmalseiten 68, 69 des Entladungsraumes 65 zur Formung des elektrischen Feldes; zwei vakuumdichten Endplatten 41,42 mit Durchtrittsöffnungen 44, 45 konzentrisch zur Laserstrahlachse, die den Einschluß des Mikrowellenfeldes garantieren.

## Ansprüche

1. Verfahren zur elektrischen Anregung eines Lasergases, insbesondere eines $CO_2$-$He$-$N_2$ Gemisches, welches unter einem Winkel (11), vorzugsweise senkrecht, zur axialen Lasergasentladungsstrecke (12) zugeführt wird und welches durch unter einem Winkel (13), vorzugsweise senkrecht,zur Lasergasentladungsstrecke (12) eingekoppelte Mikrowellen gezündet wird, dadurch gekennzeichnet, daß das Lasergas in den Einkoppelbereich (14) der Mikrowellen zugeführt wird, das Lasergas dort gezündet wird und die Mikrowellen und das gezündete Lasergas sich über die Verzweigung (15) in die beiden, die Lasergasentladungsstrecke (12) bildenden Arme (16,17) oder in den einen, die Lasergasentladungsstrecke (12) bildenden Arm (18) ausbreiten.

2. Verfahren nach Anspruch 1, dadurch gekennzeichnet, daß die Wellenlänge, der Mikrowellen im Hohlleiter viel größer als die Linearabmessung (19) der Lasergasentladungsstrecke (12) ist.

3. Verfahren nach Anspruch 1 oder 2, dadurch gekennzeichnet, daß die Lasergasentladungsstrecke (12) mit der optische Achse (20) des Resonators zusammenfällt.

4. Verfahren nach einem der Ansprüche 1 bis 3, dadurch gekennzeichnet, daß die Lasergaszuführung (21) als Koaxialhohlleiter ausgeführt ist und die dort einfallenden Mikrowellen an einem Kurzschluß (2) reflektiert werden und im Bereich mindestens eines Zündstiftes (23, 24) eine elektrische Zündfeldstärke für das Lasergas erzeugen und daß der Zündstift weiterhin einen dielektrischen Strömungskörper (75) trägt.

5. Verfahren nach einem der Ansprüche 1 bis 4, dadurch gekennzeichnet, daß die Mikrowellen eine Frequenz von 2,45 GHz besitzen.

6. Gaslaser, insbesondere schnellströmender $CO_2$-Hochleistungslaser, zur Durchführung des Verfahrens nach einem der Ansprüche 1 bis 5, mit mindestens einem lasergasdurchströmten Entladungsmodul (25) und mindestens einem Mikrowellensender (26) im Gigahertzbereich, wobei Entladungsmodul (25) und Mikrowellensender (26) über einen Hohlleiter (27) miteinander verbunden sind, dadurch gekennzeichnet, daß das Entladungsmodul (25) aus einer T-Verzweigung (15) mit zwei, vorzugsweise gleichlangen, Armen (16,17) und einer unter einem Winkel (11), vorzugsweise senkrecht, zur axialen Lasergasentladungsstrecke (12) angeordneten Lasergaszuführung (21) bzw. aus einer L-Verzweigung (15) mit einem der Lasergaszuführung (21) zugeordneten Arm (18) besteht und daß der zum Mikrowellensender (26) führende Hohlleiter (27) zur axialen Lasergasentladungsstrecke (12) geneigt (13), vorzugsweise senkrecht dazu und im Bereich der Verzweigung (15) der Lasergaszuführung (21) angeordnet ist.

7. Gaslaser nach Anspruch 6, dadurch gekennzeichnet, daß der Hohlleiter (27) einen rechteckigen Querschnitt aufweist, daß in einer Seite des Hohlleiters (27) zwei Schrauben (28,29) zum Bilden einer Hohlleiterstrecke zur Impedanzanpassung angeordnet sind, von denen sich jede in einer Hälfte (33) der Seite (32) befindet, daß der Mittenabstand (30) der Schrauben (28,29) 1/4 der Wellenlänge im Hohlleiter (27) entspricht und der Abstand der einen Schraube (28) zur Längenmitte (31) 1/16 der Wellenlänge im Hohlleiter (27) beträgt.

8. Gaslaser nach Anspruch 6 oder 7, dadurch gekennzeichnet, daß alle Arme (16,17,18) als Hohlleiter ausgebildet sind und die Lasergaszuführung (21) als Koaxialhohlleiter ausgebildet und mit einem Kurzschluß (22) versehen ist.

9. Gaslaser nach einem der Ansprüche 6 bis 8, dadurch gekennzeichnet, daß der Koaxialhohlleiter (21) eine Länge besitzt, die 1/4 der Wellenlänge im Koaxialhohlleiter (21) entspricht und am elektrisch abgeschlossenen Ende des Koaxialhohlleiters (21) der Kurzschluß (22) als metallischer Zündstifthalter ausgebildet ist, der einmal den erforderlichen Gasdurchsatz erlaubt, die Mikrowelle nach außen abschirmt und mindestens einen Zündstift (23,24) trägt.

10. Gaslaser nach einem der Ansprüche 6 bis 9, dadurch gekennzeichnet, daß der Zündstift (23,24) in seiner Eintauchtiefe im Koaxialhohlleiter (21) verstellbar ist und vorzugsweise am Kurzschluß (22) einen größeren Durchmesser (37) aufweist, als an seinem freien Ende (38).

11. Gaslaser nach einem der Ansprüche 6 bis 10, dadurch gekennzeichnet, daß innerhalb der Hohlleiter (16,17,18) konzentrisch ein vorzugsweise dielektrisches Entladungsrohr (34) mit einer Verzweigung (15) angeordnet ist.

12. Gaslaser nach einem der Ansprüche 6 bis 11, dadurch gekennzeichnet, daß zwischen dem Koaxialhohlleiter (21) und dem Einlauf (35) des dielektrischen Entladungsrohrs (34) eine Dichtung (36) angeordnet ist.

13. Gaslaser nach einem der Ansprüche 6 bis 12, dadurch gekennzeichnet, daß die Hohlleiter (16,17,18) an ihren zu den Auskoppel-bzw. Endspiegeln (39,40) gerichteten Seiten mit Endplatten (41,42,44) verschlossen sind, die den Austritt der Mikrowellen verhindern und daß in den Endplatten (41,42,44) vorzugsweise zentrische Durchtrittsöffnungen (43,45,46) zum Durchführen des im Durchmesser kleineren Entladungsrohres (34) vorgesehen sind.

14. Gaslaser nach einem der Ansprüche 6 bis 13, dadurch gekennzeichnet, daß die Hohlleiter (16,17,18) einen rechteckigen Querschnitt aufweisen.

15. Gaslaser nach einem der Ansprüche 6 bis 14, dadurch gekennzeichnet, daß an der mit dem Hohlleiter (27) verbundenen Wand (50) und der dieser Wand (50) gegenüberliegenden Wand (51) keilförmige metallische Einsätze (52) innerhalb der Hohlleiter (16,17,18) angeordnet sind, die die Breite dieser Hohlleiter (16,17,18) nahezu auf die Abmessung der "Cut-off-Breite" reduzieren.

16. Gaslaser nach einem der Ansprüche 6 bis 15, dadurch gekennzeichnet, daß an der mit dem Koaxialhohlleiter (21) verbundenen Wand (53) und der dieser Wand (53) gegenüberliegenden Wand (54) der Hohlleiter (16,17,18) profilierte Metallstäbe (55) mit vorzugsweise halbkreisförmiger Oberfläche zur Formung des elektrischen Feldes angeordnet sind.

17. Gaslaser nach Anspruch 16, dadurch gekennzeichnet, daß die Metallstäbe (55) eine kleinere Breite (56) aufweisen als der Entladungsrohrdurchmesser (57).

18. Gaslaser nach einem der Ansprüche 6 bis 13, dadurch gekennzeichnet, daß die Hohlleiter (16,17,18) einen kreisförmigen Querschnitt aufweisen.

19. Gaslaser nach Anspruch 13, dadurch gekennzeichnet, daß im Innern der zylindrischen Hohlleiter (16,17,18) profilierte Metallstäbe (55) angeordnet sind.

20. Gaslaser nach einem der Ansprüche 6 bis 10 oder 18 oder 19, dadurch gekennzeichnet, daß die Lasergazuführung (21) tangential angeordnet ist.

21. Gaslaser nach Anspruch 20, dadurch gekennzeichnet, daß innerhalb der Hohlleiter (16,17,18) im Bereich der Lasergaszuführung (21) und des Hohlleiters (27) Zündstifte (24) angeordnet sind.

22. Gaslaser nach einem der Ansprüche 6 bis 10 oder 18 bis 21, dadurch gekennzeichnet, daß der Hohlleiter (27) mit einem dielektrischen Fenster (60) abgeschlossen ist, das vorzugsweise in zwei Rundflanschen (61,62) vakuumdicht eingesetzt ist oder durch eine Metall-Keramik-Verbindung abgedichtet ist.

23. Gaslaser nach Anspruch 22, dadurch gekennzeichnet, daß der zur Lasergasentladungsstrecke (12) gerichtete Raum (63) unmittelbar hinter dem Fenster (60) größer ist als der Querschnitt des Hohlleiters (27).

24. Verfahren zum Anregen eines Lasergases, insbesondere eines $CO_2$-He-$N_2$ Gemisches, welches unter einem Winkel (11), vorzugsweise senkrecht, zur axialen Lasergasentladungsstrecke (12) zugeführt wird und welches durch unter einem Winkel (13), vorzugsweise senkrecht zur Lasergasentladungsstrecke (12) eingekoppelte Mikrowellen gezündet wird, dadurch gekennzeichnet, daß das Lasergas über im wesentlichen die gesamte Lasergasentladungsstrecke (12) transversal (Pfeilrichtung 64) zu- und abgeführt wird und die in die Lasergaszuführung (21) einfallenden Mikrowellen an einem Kurzschluß (22) reflektiert werden und im Bereich mehrerer Zündstifte (23) ine elektrische Zündfeldstärke über die gesamte Lasergasentladungsstrecke (12) für das Lasergas erzeugen.

25. Verfahren zum Anregen eines Lasergases nach Anspruch 24, dadurch gekennzeichnet, daß die Lasergasentladungsstrecke (12) mit der optischen Achse (20) des Resonators zusammenfällt.

26. Gaslaser, insbesondere schnellströmender $CO_2$-Hochleistungslaser zur Durchführung des Verfahrens nach einem der Ansprüche 24 oder 25, mit mindestens einem lasergasdurchströmten Entladungsraum (65) und mindestens einem Mikrowellensender (26) im Gigahertzbereich, wobei Entladungsraum (65) und Mikrowellensender (26) über einen Hohlleiter (27) miteinander verbunden sind, dadurch gekennzeichnet, daß der Entladungsraum (65) aus einem Hohlleiter mit rechteckförmigem Querschnitt besteht, an den eine sich über nahezu den gesamten Entladungsraum (65) erstreckende Lasergaszuführung (21) mit rechteckförmigem Querschnitt angeschlossen ist, welche als Hohlleiter ausgebildet ist und der Hohlleiter (27) für die Einkopplung der Mikrowellen, vorzugsweise im Mittenbereich unter einem Winkel (13), vorzugsweise senkrecht, zu dem Entladungsraum (65) und der Lasergaszuführung (21) angeordnet ist.

27. Gaslaser nach Anspruch 26, dadurch gekennzeichnet, daß der Hohlleiter (27) einen rechteckigen Querschnitt aufweist, daß in einer Seite des Hohlleiters (27) zwei Schrauben (28,29) zum Bilden einer Hohlleiterstrecke zur Impedanzanpassung angeordnet sind, von denen sich jede in einer Hälfte (33) der Seite (32) befindet, daß der Mittenabstand (30) der Schrauben (28,29) 1/4 der Wellenlänge im Hohlleiter (27) entspricht und der Abstand der einen Schraube (28) zur Längenmitte (31) 1/16 der Wellenlänge im Hohlleiter (27) beträgt.

28. Gaslaser nach Anspruch 26 oder 27, dadurch gekennzeichnet, daß die Lasergaszuführung (21) mit einem Kurzschluß (22) versehen ist und Öffnungen (67) für den Einlauf der Gasströmung aufweist.

29. Gaslaser nach einem der Ansprüche 26 bis 28, dadurch gekennzeichnet, daß die Lasergaszuführung (21) als rechteckiger Koaxialhohlleiter ausgebildet ist und der Kurzschluß (22) als Zündstifthalter ausgebildet ist.

30. Gaslaser nach einem der Ansprüche 26 bis 29 dadurch gekennzeichnet, daß profilierte Metallstäbe (55) auf den Innenflächen der Schmalseiten (68,69) des Entladungsraumes (65) angebracht sind.

31. Gaslaser nach einem der Ansprüche 26 bis 30, dadurch gekennzeichnet, daß ein profiliertes Metallnetz (70), das die Mikrowelle nach außen abschirmt und das Ausströmen des Lasergases gewährleistet, an der Breitseite (71) der Lasergasabführung (72) angebracht ist.

32. Gaslaser nach einem der Ansprüche 1 bis 31, dadurch gekennzeichnet, daß der Mikrowellensender (26) als an sich bekannter Mikrowellenherdsender ausgebildet ist.

Fig. 1

Fig. 2

Fig. 3

0 284 719

Fig. 4

Fig. 5

Mikrowelle

Fig. 6

Fig. 7

Fig. 8

0 284 719

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | JOURNAL OF APPLIED PHYSICS, Band 49, Nr. 7, Juli 1978, Seiten 3753-3756, American Institute of Physics; K.G. HANDY et al.: "Laser generation by pulsed 2.45-GHz microwave excitation of CO2" * Seite 3751, Figuren 1,2 * --- | 1,3,5,6 ,11,14, 24-26, 32 | H 01 S 3/097 |
| A | IEEE JOURNAL OF QUANTUM ELECTRONICS, Band QE-20, Nr. 3, März 1984, Seiten 276-283, IEEE, New York, US; J.H.S. WANG et al.: "Radio frequency pumped mid-infrared waveguide lasers" * Seiten 276-277; Figuren 1,2 * ----- | 1,6,24, 26,32 | |

**RECHERCHIERTE SACHGEBIETE (Int. Cl.4)**

H 01 S

Der vorliegende Recherchenbericht wurde für alle Patentansprüche erstellt

| Recherchenort | Abschlußdatum der Recherche | Prüfer |
|---|---|---|
| DEN HAAG | 06-06-1988 | MALIC K. |